# EUROPEAN PATENT APPLICATION

(11) **EP 3 029 621 A1**
(43) Date of publication of application: **08.06.2016**
(21) Application number: 15196582.9
(22) Date of filing: 26.11.2015
(51) Int. Cl.: G06Q 30/02

(54) **A PROCESS AND SYSTEM FOR PROVIDING BUSINESSES WITH THE ABILITY TO SUPPLY SETS OF COUPONS TO POTENTIAL CUSTOMERS**

(30) Priority: 01.12.2014 IL 23601614
(71) Applicant: Deutsche Telekom AG, 53113 Bonn (DE)
(72) Inventor: KATZ, Gilad, Rehovot (IL); SHABTAI, Asaf, Nes Ziona (IL); ELOVICI, Yuval, 79864 Arugot (IL); PROHL, Matthias, 53113 Bonn (DE); KETABDAR, Hamed, 53113 Bonn (DE)
(74) Representative: Taor, Simon Edward William

(57) **Abstract**

A context-based recommendation process running in a cloud based system is presented. The process utilizes the capabilities of mobile communication networks and devices to provide businesses with the ability to supply sets of coupons to potential customers in a cost effective manner. The process uses real time and historical information that is provided by various sensors on a customer's smart mobile device to derive the customer's context. To make a recommendation, the system determines the current context of the customer and selects the right offer for the current context. The context is defined as both the external and internal environments in which the customer is active.

## Description

### Field of the Invention

The invention is from the fields of marketing and mobile communication. Specifically the invention is related to coupon recommendation systems for mobile devices.

### Background of the Invention

A coupon is a document provided by a retailer, manufacturer, or service provider to potential customers that can be exchanged for a discount when purchasing a product or service. The purposes of the coupon are to attract price conscious consumers to buy specific products and/or to attract new customers. Originally coupons were printed in newspapers, magazines, or on the packaging of goods and the customer would cut them out and take them to the retail store/s specified on the coupon to be redeemed. In recent years with the development of the internet, and more recently mobile communication services, coupons are more and more being distributed in electronic form.

Smart mobile devices, being small computers that are always connected to the internet and carried by consumers, are increasingly being used for context-based recommendation. Existing applications for mobile devices push messages and coupons to the device owner mainly based on his location. The mobile devices comprise sensors that provide mobile service providers with a great deal more information than just the location of the device holder. This additional information includes, degree of activity, data usage, incoming and outgoing call and messaging logs, location of friends etc. In addition information about a specific customer's social connections, e.g. "friends" from social networks, is readily available.

These applications enable a service provider to offer different business the option to promote their products by offering coupons\discounts\offers to their potential customers. In order to be attractive to the business the applications must be designed to maximize the coupons\discounts\offers consumption while minimizing the cost to the businesses. In other words, the application must propose the right offer to the right potential customer such that there is a high probability that the offer will be consumed while searching for the most valuable, i.e. profitable, offer from the point of view of the business.

It is a purpose of the present invention to allow mobile communication device service providers to make use of the information available to them to recommend to businesses coupons that can be proposed to consumers, so that overall coupon consumption is maximized in a manner that increases the revenues of the businesses participating in the program.

It is another purpose of the present invention to provide a system that learns the pattern of coupons consumption and presents a set of coupons to a customer in the right order and time so that the system will not only increase the consumption of the customers but will also avoid giving customers the feeling that they are being pushed into accepting an offer that does not interest them.

Further purposes and advantages of this invention will appear as the description proceeds.

### Summary of the Invention

In a first aspect the invention is a system for executing a context-based recommendation process running in a cloud based system that utilizes the capabilities of mobile communication networks and devices to provide businesses with the ability to supply sets of coupons to a potential customer in a cost effective manner. The system comprises:
a. an application running on the customer's mobile communication device, the application is adapted for collecting and sending data gathered from sensors on the device and interacting with the customer showing him coupons recommended by the system;
b. a database that contains all customer related data received from the sensors on the customer's device and other sources and business related data relative to the coupons to be offered;
c. an Analytics Services module that comprises software containing algorithms adapted to derive high level useful information from the sensor data, other data in the database, and from data sources that are external to the system and from all information available to it to determine the current context of the customer;
d. a Recommendation module that comprises software containing algorithms adapted to process information received from the analytics services module to determine a list of coupons that can be offered to the specific customer in the specific context, to determine a utility score for each coupon in the list, and to update the recommendation model based on previous offers and consumptions; and
e. a Coordination Module that comprises software containing algorithms adapted to receive and process the items on the list of coupons sent from the Recommendation module and, from this list, to determine the best set of coupons and the order and timing between the offers in the set.

In embodiments of the system of the invention the Coordination Module comprises components adapted to send the best set of coupons and the order and timing between the offers in the set to the Recommendation module, which comprises components adapted to send the offers to the customer's mobile device.

In embodiments of the system of the invention the Coordination Module comprises components adapted to send the best set of coupons and the order and timing between the offers in the set to the customer's mobile device and to the Database.

In embodiments of the system of the invention, if the coupons in the set are not all sent at the same time, the algorithms in the Coordination Module make decisions to send subsequent coupons in the set that depend on the consumption of the preceding coupon.

In embodiments of the system of the invention the decision how best to present the coupons in the set to a specific customer in a specific context is made by the algorithms in the Coordination Module on the basis of past experience with the customer and statistical analysis of the behavior of similar customers in similar contexts.

In embodiments of the system of the invention the process of deciding which coupons are to be offered to the customer is executed by the algorithms in the Coordination Module using a probabilistic (Bayesian) platform. In these embodiments the probabilistic (Bayesian) platform is K-arm Bandits.

In a second aspect the invention is a context-based recommendation process running in a cloud based system that utilizes the capabilities of mobile communication networks and devices to provide businesses with the ability to supply sets of coupons to potential customers in a cost effective manner.

The system on which the process of the second aspect runs comprises:
a. an application running on the customer's mobile communication device, the application adapted for collecting and sending data gathered from sensors on the device and interacting with the customer showing him coupons recommended by the system;
b. a database that contains all customer related data received from the sensors on the customer's device and other sources and business related data relative to the coupons to be offered;
c. an Analytics Services module that comprises software containing algorithms adapted to derive high level useful information from the sensor data, other data in the database, and from data sources that are external to the system and from all information available to it to determine the current context of the customer;
d. a Recommendation module that comprises software containing algorithms adapted to process information received from the analytics services module to determine a list of coupons that can be offered to the specific customer in the specific context, to determine a utility score for each coupon in the list, and to update the recommendation model based on previous offers and consumptions; and
e. a Coordination Module that comprises software containing algorithms adapted to receive and process the items on the list of coupons sent from the Recommendation module and, from this list, to determine the best set of coupons and the order and timing between the offers in the set;

The process of the invention comprises:
i. running the application on the customer's mobile device to collect data from sensors on the device;
ii. collecting customer related data received from the sensors on the customer's device and other sources and business related data relative to the coupons to be offered in the data base;
iii. running the software algorithms of the Analytics Services module to determine the current context of the customer;
iv. running the software algorithms of the Recommendation module to determine a list of offers that are suitable for the customer in the current context and to determine a utility score for each coupon in the list; and
v. running the software algorithms of the Coordination module to determine from the list of suitable offers and utility scores the best set of offers that can be sent to the customer and the order and timing between sending the offers in the set.

If the coupons in the set are not all sent at the same time, the decision to send subsequent coupons in the set depends on the consumption of the preceding coupon.

In embodiments of the process of the invention the decision how best to present the coupons in the set to a specific customer in a specific context is made on the basis of past experience with the customer and statistical analysis of the behavior of similar customers in similar contexts.

In embodiments of the process of the invention the process of deciding which coupons are to be offered to the customer is executed using a probabilistic (Bayesian) platform. In these embodiments the probabilistic (Bayesian) platform can be K-arm Bandits.

All the above and other characteristics and advantages of the invention will be further understood through the following illustrative and non-limitative description of embodiments thereof, with reference to the appended drawings.

### Brief Description of the Drawings

Fig. 1 schematically shows the main components of the system that executes the method of the invention; and
Fig. 2 schematically shows the main components of another embodiment of the system that executes the method of the invention.

### Detailed Description of Embodiments of the Invention

The present invention employs a context-based recommendation process running in a cloud based system that utilizes the capabilities of mobile communication networks and devices to provide businesses with the ability to supply sets of coupons to potential customers in a cost effective manner. The process uses real time and historical information such as location, number of social messages (SMS, WhatsApp...), applications used, activity (moving or stationary) etc., that is provided by various sensors on a customer's smart mobile device to derive the customer's context. To make a recommendation, the system determines the current context of the customer and selects the right offer for the current context. Herein the word "context" is defined as both the external environment (time of day, day of week, weather, temperature, traffic, location of the customer, location of the customer's friends etc.) and the internal environment (mood, hunger level, current activity, the manner in which the mobile device is used etc.) in which the customer operates. Herein the term "current context" is used to denote the context at a specific time at which the system is activated to determine which, if any, coupons to offer to a customer.

In previously filed patent applications, e.g. US 14/691,895, the inventors have described a system in which several coupons are presented at a given point in time to a customer. The customer is then able to choose one or more of these coupons (or none), thus ending the current "transaction". The present invention differs from the previously described inventions by the key aspect that, in this case, each of the coupons presented to the customer is potentially a set of coupons that will be presented to the customer over time. The following example illustrates the principle of the present invention. In this example a customer is presented with three coupons on her mobile device. Two of these coupons will simply offer discounts to nearby restaurants, as in the prior art. The third coupon is in fact a set of two coupons. The customer only sees the first coupon in the set, which offers a coupon to a restaurant located in a nearby mall. If the customer chooses to consume this coupon, then, approximately 40 minutes after the meal begins, she will be offered the second coupon in the set, which offers a discount to a nearby shoe store.

It is important to note that the offer of the second (and potentially third coupon, fourth, and so on) is contingent on the consumption of the preceding coupons in the set. It should also be noted that the time intervals between the different coupons in the set may vary - a pair of coupons may be an hour apart (a coupon for ice cream after a meal at a restaurant, for example) or five minutes (as soon as a customer purchases a pair of shoes, we may offer a coupon for a nearby hat store).

The ability to offer "sets" of coupons presents both an opportunity and a difficulty: the opportunity lies in the ability of the system to consider multiple sets which share the first coupon(s). The difficulty lies in the additional calculations that need to take place. This issue is best explained by another example: This example assumes that there are three sets of coupons can be presented to a customer and that currently the customer can be presented with only a single coupon. Set 1 has coupons {A,B,C}, Set 2 has the coupons {A,D,E} and Set 3 has the coupons {F,G,H}. In this example, based on the utility values of the coupon sets as described herein below, Set 3 has a slightly higher probability of being consumed, but sets 1 and 2 have a shared initial coupon (A), which has a relatively large possibility of being purchased. The purchase of coupon A "opens the way" to two possible sets of coupons - depending on which coupon/s is/are chosen to present to the customer after the purchase of A - either coupon B or coupon D or both). The large number of options makes offering coupon A likely to be more profitable than coupon F and therefore the system chooses to initially present coupon A to the customer.

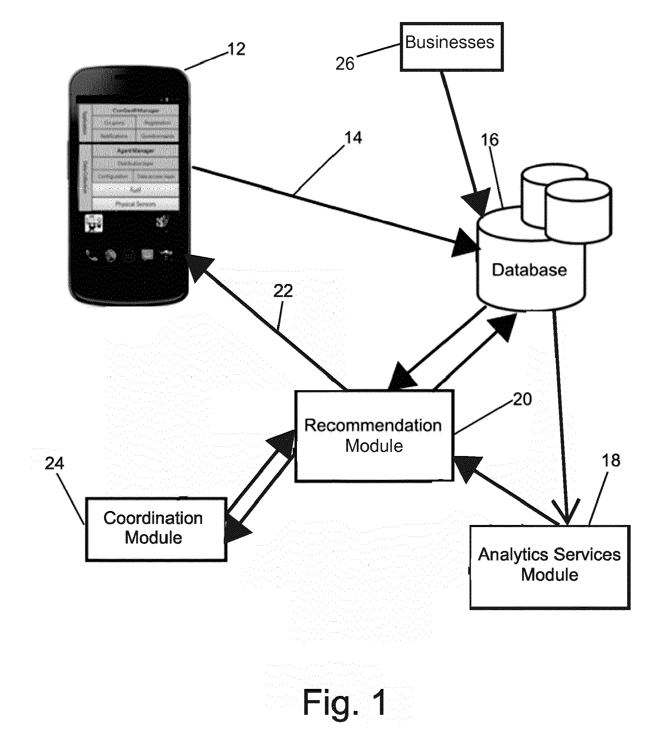

Fig. 1 schematically shows the main components of the system that executes the method of the invention. These components are:
A coupon application running on a customer's mobile communication device 12. The application is adapted to collect sensor and other data from device 12 and to send the data to a Database 16 and also to interact with the customer showing him coupons recommended by the system.
Sensor and other data 14 sent from mobile device 12 to the system Database 16.

A Database 16 that contains all customer data including, for example, sensor information, e.g. current location, number and frequency of social messages (SMS, Whatsup, etc.), applications used, and current activity (speaking, texting, working, attending a sporting event, etc.); and other more specific information, e.g. numbers from the mobile device call log and names from the contact list, that can be used to compile a list of the customer's friends; and coupon information, e.g. coupons offered and coupons consumed. The database also contains business related information such as a list of businesses that are registered to the service, the types of products they sell and services they offer, and also information added by the business such as the type of product or service for which they want to offer coupons, the value of the discounts that they are willing to offer, etc.

An Analytics Services module 18, which is a component that comprises software containing algorithms adapted to derive high level useful information about the customer and related to the context from the sensor data. For example, based on the analysis of the data collected for a duration of one month from the activity sensor, which indicates the level of activity and direction of travel of the mobile phone, the algorithms of this component can derive with a high level of certainty that the customer owns a car. The Analytics Services module comprises components adapted to communicate with the database 16, a Recommendation module 20, and also data sources that are external to the system, e.g., current weather from an external web site and sources that can be used to compile the list of the customer's friends, e.g. Facebook, Twitter, and the web site of the customer's place of employment or school/university. Based on all of the information available to the Analytics Services module 18, its algorithms determine the current contexts of customers. A Recommendation module 20, which comprises software containing algorithms adapted to execute the actual logic that determines the properties, e.g. name of the business, type of product or service, amount of discount, and time of sending, of coupons that could be sent to the application on the customer's device. The input to this module includes the information and contexts received from the Analytics Services module 18. The algorithms of the Recommendation module 20 process the information, and, on the basis of the current context of the specific customer, determine a list of offers that are appropriate for the customer and a utility score for each offer. This list is sent to a Coordination Module 24. The algorithms of the Recommendation Algorithm module are also adapted to update the recommendation model based on previous offers and consumptions.

A Coordination Module 24 that comprises software containing algorithms adapted to receive and process the items on the list of suitable offers sent from the Recommendation Algorithm module 20 and to determine the best set of offers and the order and timing between the offers in the set and to send them to the Recommendation module that comprises components adapted to send offers 22 to the customer's mobile device 12.

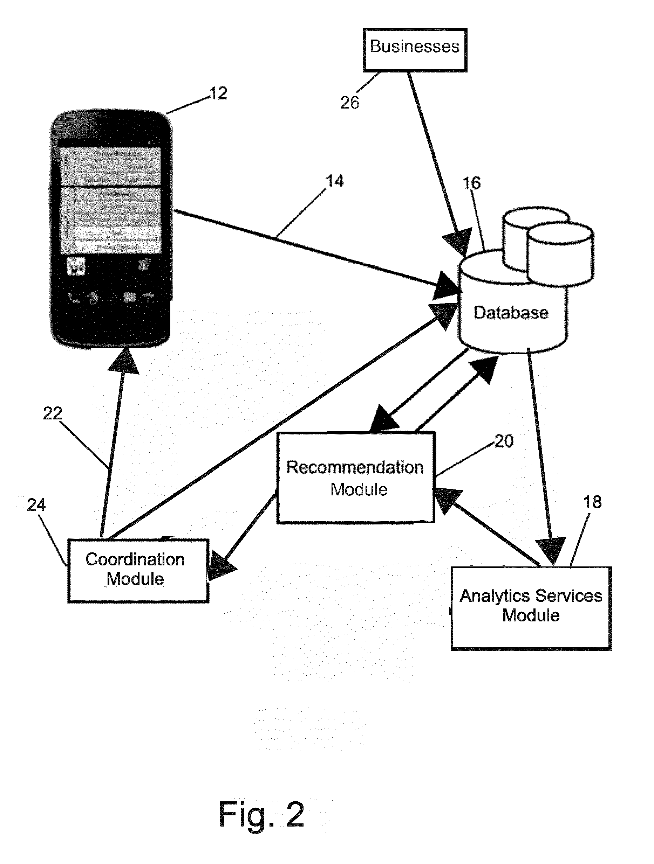

Fig. 2 schematically shows the main components of another embodiment of the system that executes the method of the invention. In this embodiment the algorithms of the Coordination module 24 make a determination of the best set of offers 22 and the order and timing between the offers in the set. The coordination module comprises components adapted to send the offers in set 22 to the customer's mobile device 12 and to the Database 16.

In addition, both Fig. 1 and Fig. 2 show that businesses related data 26 is also input into database 16.

As an illustrative but non-limiting illustration of how the method of the invention operates, assume that there are presently two coupons - c1 and c2 - that could be offered to customer u based on his/her current location and context. The following six scenarios are possible:
1) Recommend nothing - this will be the case if the Recommendation Algorithms module reaches the conclusion that none of the available coupons is relevant to the customer and that offering them would only result in the customer's displeasure.
2) Recommend coupon c1 - in the coming recommendation iteration, coupon c1 will be offered to the customer.
3) Recommend coupon c2 - in the coming recommendation iteration, coupon c2 will be offered to the customer.
4) Recommend coupons c1 and c2 - in the coming recommendation iteration, both coupons will be offered to the customer.
5) Recommend coupon c1 in the coming iteration and c2 in the following iteration - only one coupon will be made available at first, and the other coupon will be made available in the next recommendation iteration under certain circumstances
6) Recommend coupon c2 in the coming iteration and c1 in the following iteration - only one coupon will be made available at first, and the other coupon will be made available in the next recommendation iteration under certain circumstances

One of the reason that the coupons in the set should be presented separately (scenarios 5-6) instead of together (scenaris 4) is that for some customers, having several coupons pushed to them at one time may arouse a feeling that an attempt is being made to force them into making purchases that they are not really interested in making and thereby cause them to "rebel" by not using any of the coupons. For these customers, the best course of action in order to increase coupon consumption would be proposing the coupons in "steps". Other customers, on the other hand, may appreciate more "comprehensive" deals and to them the system can offer the coupons as a bundle. It is the function of the algorithms in the Coordination module to decide, on the basis of past experience with the customer and statistical analysis of the behavior of similar, e.g. age, sex, marital status, customers in similar contexts, how best to present the coupons in the set to a specific customer in a specific context.

The process of deciding which coupons are to be offered to the customer can be executed using a wide variety of algorithms. The literature in the area of recommendations (on mobile devices and in general) is extensive. The present invention can be efficiently executed using a probabilistic (Bayesian) platform, for example K-arm Bandits.

The system of the invention uses the sensors of the customer's mobile device and possibly those of his/her friends or people in the vicinity to determine the context of the customer. For each context, each individual coupon and a set (combination) of coupons are assigned with a utility score. Given a customer and his/her current context, the combination of coupons with the highest utility will be offered.

The utility score is composed of two factors: exploration and exploitation. The exploitation component represents the recommendation systems estimation of the immediate gain that can be obtained by offering the coupon to the customer. One example for a basic exploitation component would be a multiplication of the probability of the user using the coupon and the monetary gain that is to be had by that consumption. The exploration component represents the amount of information that is available for a given coupon (or a set of coupons). If little information is available for a coupon, the component will assign it with a high score, indicating an interest in experimenting with the coupon further. By combining the scores from these two components, the recommendation system balances between the need to offer customers relevant and useful coupons, while also gaining knowledge about potential new offers. The weight assigned to each component may depend on multiple factors such as the maturity of the systems, the coupon type etc.

The utility value is computed also for various consumption patterns of the same coupon set. For example, assuming that a coupon set C comprises two coupons - c1 and c2. The algorithms of the system will compute the utility function within a specific context for the case of offering different ways of presenting the coupons to the customer, e.g. presenting the two coupons together and for presenting c1 and then one hour later presenting c2.

The exploration factor in the calculation of the utility score ensures that a sufficient number of offers of the specific combination of coupons were previously offered in order to make a sound recommendation, i.e. to better learn the consumption behavior of customers within the context.

The exploitation factor in the calculation of the utility score ensures that the system offers the combination of coupons with the highest reward associated with the coupon set in the specific context for the businesses offering them. The reward may depend on a variety of factors, including (but not limited to) the size of the discount, whether or not the customer has visited the business before, the day of the week, rate of consumption of the coupon combination within the current context, etc.

Both the exploitation and exploration factors of the coupon set are updated when information about the actual consumption is available. This phase is also referred to as model update.

Although embodiments of the invention have been described by way of illustration, it will be understood that the invention may be carried out with many variations, modifications, and adaptations, without exceeding the scope of the claims.

## Claims

1. A system for executing a context-based recommendation process running in a cloud based system that utilizes the capabilities of mobile communication networks and devices to provide businesses with the ability to supply sets of coupons to a potential customer in a cost effective manner the system comprising:
a. an application running on the customer's mobile communication device, the application adapted for collecting and sending data gathered from sensors on the device and interacting with the customer showing him coupons recommended by the system;
b. a database that contains all customer related data received from the sensors on the customer's device and other sources and business related data relative to the coupons to be offered;
c. an Analytics Services module that comprises software containing algorithms adapted to derive high level useful information from the sensor data, other data in the database, and from data sources that are external to the system and from all information available to it to determine the current context of the customer;
d. a Recommendation module that comprises software containing algorithms adapted to process information received from the analytics services module to determine a list of coupons that can be offered to the specific customer in the specific context, to determine a utility score for each coupon in the list, and to update the recommendation model based on previous offers and consumptions; and
e. a Coordination Module that comprises software containing algorithms adapted to receive and process the items on the list of coupons sent from the Recommendation module and, from this list, to determine the best set of coupons and the order and timing between the offers in the set.

2. The system of claim 1, wherein the Coordination Module comprises components adapted to send the best set of coupons and the order and timing between the offers in the set to the Recommendation module that comprises components adapted to send the offers to the customer's mobile device.

3. The system of claim 1 or 2, wherein the Coordination Module comprises components adapted to send the best set of coupons and the order and timing between the offers in the set to the customer's mobile device and to the Database.

4. The system of any one of claims 1 to 3, wherein, if the coupons in the set are not all sent at the same time, the algorithms in the Coordination Module make decisions to send subsequent coupons in the set that depend on the consumption of the preceding coupon.

5. The system of any one of claims 1 to 4, wherein the decision how best to present the coupons in the set to a specific customer in a specific context is made by the algorithms in the Coordination Module on the basis of past experience with the customer and statistical analysis of the behavior of similar customers in similar contexts.

6. The system of any one of claims 1 to 5, wherein a process of deciding which coupons are to be offered to the customer is executed by the algorithms in the Coordination Module using a probabilistic (Bayesian) platform.

7. The system of claim 6, wherein the probabilistic (Bayesian) platform is K-arm Bandits.

8. A context-based recommendation process running in a cloud based system that utilizes the capabilities of mobile communication networks and devices to provide businesses with the ability to supply sets of coupons to potential customers in a cost effective manner, the system comprising:
a. an application running on the customer's mobile communication device, the application adapted for collecting and sending data gathered from sensors on the device and interacting with the customer showing him coupons recommended by the system;
b. a database that contains all customer related data received from the sensors on the customer's device and other sources and business related data relative to the coupons to be offered;
c. an Analytics Services module that comprises software containing algorithms adapted to derive high level useful information from the sensor data, other data in the database, and from data sources that are external to the system and from all information available to it to determine the current context of the customer;
d. a Recommendation module that comprises software containing algorithms adapted to process information received from the analytics services module to determine a list of coupons that can be offered to the specific customer in the specific context, to determine a utility score for each coupon in the list, and to update the recommendation model based on previous offers and consumptions; and
e. a Coordination Module that comprises software containing algorithms adapted to receive and process the items on the list of coupons sent from the Recommendation module and, from this list, to determine the best set of coupons and the order and timing between the offers in the set;
the process comprising:
i. running the application on the customer's mobile device to collect data from sensors on the device;
ii. collecting customer related data received from the sensors on the customer's device and other sources and business related data relative to the coupons to be offered in the data base;
iii. running the software algorithms of the Analytics Services module to determine the current context of the customer;
iv. running the software algorithms of the Recommendation module to determine a list of offers that are suitable for the customer in the current context and to determine a utility score for each coupon in the list; and
v. running the software algorithms of the Coordination module to determine from the list of suitable offers and utility scores the best set of offers that can be sent to the customer and the order and timing between sending the offers in the set;
wherein, if the coupons in the set are not all sent at the same time, the decision to send subsequent coupons in the set depends on the consumption of the preceding coupon.

9. The process of claim 8, wherein the decision how best to present the coupons in the set to a specific customer in a specific context is made on the basis of past experience with the customer and statistical analysis of the behavior of similar customers in similar contexts.

10. The process of claim 8 or 9, wherein the process of deciding which coupons are to be offered to the customer is executed using a probabilistic (Bayesian) platform.

11. The process of claim 10, wherein the probabilistic (Bayesian) platform is K-arm Bandits.
